Europäisches Patentamt

European Patent Office

Office européen des brevets

(19)

(11) Numéro de publication : **0 306 397 B1**

(12)                     **FASCICULE DE BREVET EUROPEEN**

(45) Date de publication du fascicule du brevet :
    **18.12.91 Bulletin 91/51**

(51) Int. Cl.⁵ : **G01C 19/56**

(21) Numéro de dépôt : **88402174.2**

(22) Date de dépôt : **29.08.88**

(54) **Gyromètre acoustique.**

(30) Priorité : **01.09.87 FR 8712124**

(43) Date de publication de la demande :
    **08.03.89 Bulletin 89/10**

(45) Mention de la délivrance du brevet :
    **18.12.91 Bulletin 91/51**

(84) Etats contractants désignés :
    **BE CH DE FR GB IT LI NL SE**

(56) Documents cités :
    **EP-A- 0 145 534**
    **US-A- 3 352 162**

(73) Titulaire : **BADIN-CROUZET**
    **Aéroport de Toussus-le-Noble Boîte Postale**
    **No. 13**
    **F-78117 Chateaufort (Yvelines) (FR)**

(72) Inventeur : **Leblond, Henri**
    **Aérodrome de Toussus-Le-Noble**
    **F-78117 Chateaufort (FR)**
    Inventeur : **Herzog, Philippe**
    **Aérodrome de Toussus-Le-Noble**
    **F-78117 Chateaufort (FR)**
    Inventeur : **Bruneau, Michel**
    **Lab. d'Acoustique Univ. du Maine B.P. 535**
    **F-72017 Le Mans Cedex (FR)**

(74) Mandataire : **Bloch, Gérard et al**
    **2, square de l'Avenue du Bois**
    **F-75116 Paris (FR)**

Jouve, 18, rue Saint-Denis, 75001 PARIS

## Description

La présente invention a pour objet un gyromètre acoustique comprenant une cavité remplie d'un fluide, des moyens d'excitation agencés pour exciter un premier mode de résonance acoustique de la cavité, et des moyens de mesure d'au moins un deuxième mode de résonance acoustique de la cavité, induit par les forces de Cariolis lorsque la cavité est soumise à au moins une rotation à mesurer.

Un tel gyromètre, monté sur un mobile, permet de mesurer la ou les vitesses de rotation de ce mobile autour d'un ou plusieurs axes de référence.

On connaît déjà un gyromètre du type défini ci-dessus, décrit dans le brevet français No. 2 554 225. Dans ce brevet, la cavité est en forme de parallélépipède rectangle, et elle est disposée pour que deux de ses faces parallèles entre elles soient perpendiculaires à l'axe de la rotation à mesurer. Le premier mode de résonance, c'est-à-dire le mode excité par les moyens d'excitation, est un mode dans lequel les vitesses particulaires acoustiques sont toutes parallèles et orthogonales à l'axe de rotation. Le deuxième mode de résonance, c'est-à-dire celui qui est induit par les forces de Coriolis, est du même type, c'est-à-dire dont les vitesses particulières acoustiques sont toutes parallèles, mais la direction des vitesses du mode induit est orthogonale à la direction des vitesses du mode d'excitation. Pour qu'un tel gyromètre fonctionne avec de bonnes performances, il importe qu'un certain nombre de conditions soient satisfaites. Ces conditions sont, en particulier, les suivantes :

— les distances entre deux faces parallèles entre elles et orthogonales à un mode de résonance doivent être rigoureusement égales à un nombre entier de demi-longueurs d'onde à la fréquence d'excitation ; ce nombre étant en général le même, ceci impose l'égalité rigoureuse de deux dimensions de la cavité, même si un asservissement de commande de la fréquence d'excitation est prévu,

— les faces du parallélépipède doivent être rigoureusement parallèles, et

— les transducteurs permettant la mesure du mode induit doivent être rigoureusement positionnés en un noeud du mode d'excitation.

En général, les conditions suivantes ne sont pas véritablement satisfaites. En particulier, si la distance entre les deux faces orthogonales aux vitesses particulaires acoustiques du mode d'excitation n'est pas rigoureusement égale à la distance entre les deux faces orthogonales aux vitesses particulaires acoustiques du mode induit, la fréquence propre du mode d'excitation sera légèrement différente de la fréquence propre du mode induit. Si la fréquence d'excitation est commandée par un asservissement pour être égale à la fréquence propre du mode d'excitation, le mode induit sera excité à une fréquence légèrement différente de sa fréquence propre, ce qui sera à l'origine d'imprécisions dans la mesure. Ainsi, d'une manière générale, les performances d'un tel gyromètre, à cavité parallélépipédique, sont très sensibles aux effets des imperfections mécaniques de réalisation.

Les inventeurs de la présente invention, Messieurs LEBLOND et HERZOG, de la Société Badin-Crouzet, et Monsieur BRUNEAU du Laboratoire d'Acoustique de l'Université du Maine, Laboratoire associé au C.N.R.S.-UA 1101, ont cherché à pallier les inconvénients précédents en procurant un gyromètre moins sensible aux effets des imperfections mécaniques que les gyromètres connus.

A cet effet, la présente invention a pour objet un gyromètre du type défini ci-dessus, caractérisé par le fait que la cavité est en forme de corps de révolution d'axe confondu avec l'axe de la rotation à mesurer, et les moyens d'excitation comprennent au moins un transducteur d'excitation disposé sur la paroi de la cavité, dans un plan de section droite.

Dans ce cas, le mode d'excitation et le mode induit sont des modes azimutaux, c'est-à-dire dont le mouvement particulaire acoustique s'effectue selon des cercles concentriques centrés sur l'axe de révolution, c'est-à-dire, ici l'axe de rotation, et orthogonal à celui-ci. Les extrema de pression de ces modes azimutaux ont lieu, pour chaque mode, sur une ligne passant par l'axe de rotation, et les deux lignes sont orthogonales. En fait ces deux modes apparaissent comme la décomposition orthogonale du même mouvement particulaire, ce qui a pour conséquence le fait que, sans contraintes mécaniques sévères, la fréquence propre du mode induit est toujours identique à la fréquence propre du mode d'excitation. Il en résulte une amélioration des performances du gyromètre, en particulier en ce qui concerne la tenue en température et la sensibilité.

Avantageusement, ladite cavité a une dimension axiale au plus égale au diamètre de sa plus grande section transversale.

Alors les fréquences propres d'un nombre important de modes parasites, susceptibles de se développer dans la cavité, sont supérieures à la fréquence d'excitation, et ces modes parasites, evanescents et donc atténués à la fréquence d'excitation, n'auront qu'une contribution faible dans le signal mesuré par les moyens de mesure. Le seuil de sensibilité du gyromètre est alors augmenté.

Avantageusement encore, ladite cavité est un ellipsoïde de révolution.

Cette forme procure à la cavité résonante, à fluide de remplissage identique et à volume égal, le facteur de qualité le plus élevé. Ceci contribue encore à améliorer la sensibilité.

La présente invention sera mieux comprise grâce à la description suivante de la forme de réalisation préférée du gyromètre de l'invention, faite en se référant aux dessins annexés, sur lesquels :

     — la figure 1 représente une vue en perspective de la cavité du gyromètre de l'invention,

     — la figure 2 représente une vue en coupe de la cavité, dans le plan xOy de la figure 1,

     — la figure 3 représente une vue en coupe de la cavité, dans le plan yOz de la figure 1,

     — la figure 4 représente un schéma par blocs du gyromètre de l'invention, et,

     — la figure 5 représente, de façon schématique, le mouvement particulaire acoustique d'un mode azimutal.

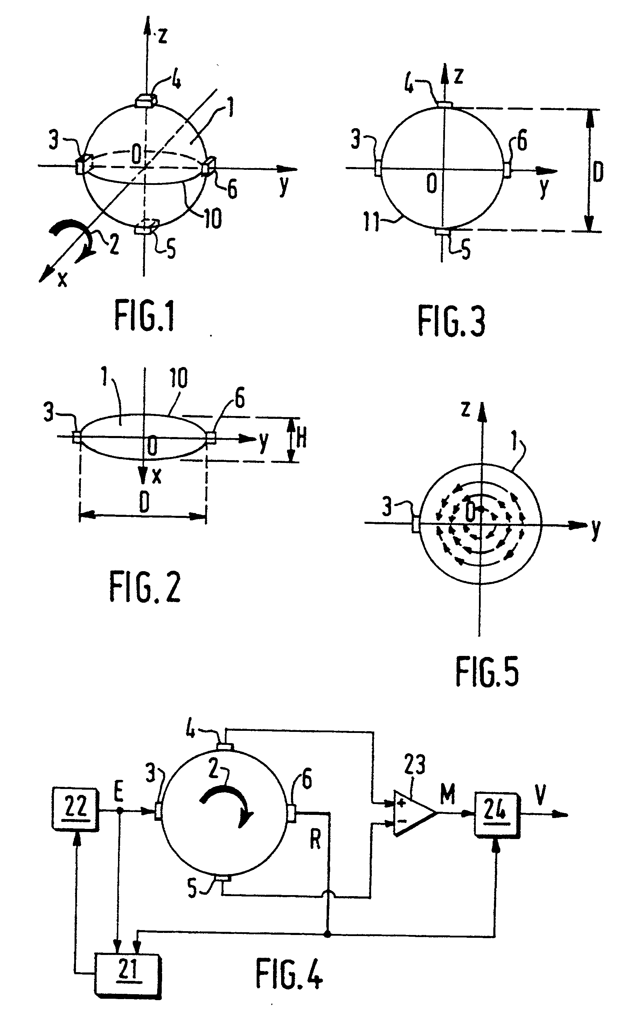

En référence à la figure 1, un gyromètre acoustique pour mesurer la vitesse d'une rotation 2 autour d'un axe Ox est maintenant décrit.

Le gyromètre comprend une cavité 1 qui est ici un ellipsoïde de révolution de type aplati, c'est-à-dire obtenu par rotation d'une ellipse 10 autour de son petit axe.

Comme le montre la figure 2, qui est une vue en coupe de la cavité 1 dans le plan xOy, O étant le centre de l'ellipse, et Oy un axe perpendiculaire en O à l'axe Ox de la rotation 2 à mesurer, le petit axe de l'ellipse 10 est porté par l'axe Ox et il est de longueur H, tandis que son grand axe porté par l'axe Oy sur la figure 2, est de longueur D.

Comme le montre la figure 3, qui est une vue en coupe de la cavité 1 dans le plan yOz, Oz étant un axe perpendiculaire en O aux axes Ox et Oy, la section transversale 11 dans le plan yOz est alors un cercle de diamètre D. Cette section transversale 11 est naturellement la plus grande section transversale du corps de révolution d'axe Ox que représente la cavité 1.

La cavité 1 est remplie d'un fluide, ici de l'air.

Un transducteur piézoélectrique 3, du type "haut-parleur" est disposé sur la paroi de la cavité 1, dans un plan de section droite de cette cavité 1, et ici sur l'axe Oy. Par transducteur piézoélectrique de type "haut-parleur" on entend, comme cela est bien connu de l'homme de métier, un transducteur qui transforme un signal électrique qui lui est appliqué en excitation acoustique du fluide dans lequel il est disposé. Le transducteur d'excitation 3 a des dimensions très faibles par rapport à celles de la cavité 1, et on le considère dans la suite comme pratiquement ponctuel.

Des transducteurs piézoélectriques de type "microphone" ici au nombre de trois, en l'occurence les transducteurs 4, 5 et 6 sont disposés sur la paroi de la cavité 1, dans le même plan de section droite que le transducteur d'excitation 3 de telle sorte que les transducteurs 4 et 5 soient décalés de 90° par rapport à ce transducteur d'excitation 3, le transducteur 6 étant décalé de 180°. Ainsi, si, comme cela est le cas sur les figures, le transducteur d'excitation 3 est disposé sur le demi-axe Oy négatif, les transducteurs 4 et 5 sont disposés sur le demi-axe Oz positif, et sur le demi-axe Oz négatif, respectivement, tandis que le transducteur 6 est disposé sur le demi-axe Oy positif. Par transducteur piézoélectrique de type "microphone", on entend, comme cela est bien connu de l'homme de métier, un transducteur qui transforme la pression acoustique qui lui est appliquée en un signal électrique. On peut dire qu'un tel transducteur est un transducteur de mesure de pression acoustique. Les transducteurs de mesure 4, 5 et 6 ont des dimensions très faibles par rapport à celles de la cavité 1, et on les considère dans la suite comme pratiquement ponctuels. Les transducteurs de mesure 4 et 5 sont ici appariés, c'est-à-dire rigoureusement identiques. Comme le montre la figure 4, le gyromètre comprend aussi des circuits électroniques auxquels sont raccordés les divers transducteurs 3, 4, 5 et 6.

Ainsi, la sortie d'un oscillateur 22 commandable en tension est reliée à l'entrée du transducteur d'excitation 3 et à une première entrée d'un circuit 21 d'asservissement de phase. La sortie du transducteur de mesure 6 est reliée à la deuxième entrée du circuit 21 d'asservissement de phase. La sortie du circuit 21 d'asservissement de phase est reliée à l'entrée de commande de l'oscillateur 22.

Les sorties de chacun des transducteurs de mesure 4 et 5 sont reliées aux entrées d'un amplificateur différentiel 23, dont la sortie est reliée à un circuit 24 de détection synchrone, qui reçoit, sur une entrée auxiliaire, le signal de sortie du transducteur de mesure 6.

Le gyromètre qui vient d'être décrit fonctionne comme suit.

L'oscillateur 22 délivre un signal d'excitation E au transducteur d'excitation 3. Ce transducteur excite dans la cavité un mode de résonance acoustique, du type connu sous le nom de mode azimutal. La figure 5, sur laquelle, dans un souci de simplicité, seul le transducteur d'excitation 3 a été représenté, montre, pour un tel mode azimutal, à l'aide de flèches, le mouvement particulaire dans la cavité 1, à l'instant particulier où le demi-axe Oy négatif est le siège de maxima de pression, tandis que le demi-axe Oy positif est le siège de minima de pression. Naturellement, lorsqu'une demi-période du signal E s'est écoulée, les sens des mouvements de particules sont inversés et le demi-axe Oy négatif est le siège de minima de pression, tandis que le demi-axe Oy positif est le siège de maxima de pression. On peut donc dire que le transducteur d'excitation 3 excite dans la cavité 1 un mode de résonance azimutal dont la ligne d'extrema de pression est l'axe Oy.

Naturellement, ceci est vrai à condition que la fréquence du signal E soit rigoureusement égale à la fréquence de résonance d'un mode azimutal de la cavité 1. Une telle fréquence est liée, comme cela est connu, en particulier aux dimensions de la cavité et à la vitesse des ondes acoustiques dans le gaz de remplissage, ici dans l'air. Pour des détails sur le calcul de cette fréquence on se reportera à l'ouvrage de Robert D. BLEVIUS "Formulas for natural frequence and mode shape" 1986 - Robert E. Krieger Editor, Malabar. USA.

Afin de maintenir la fréquence du signal E égal à la fréquence de résonance de la cavité 1, quelles que soient, en particulier et par exemple, les variations de température ambiante qui peuvent provoquer des variations des dimensions de la cavité 1 et des variations de la vitesse des ondes acoustiques dans le gaz de remplissage, le circuit d'asservissement de phase 21 commande la fréquence de l'oscillateur 22 de façon à ce que la phase entre le signal de référence R délivré par le transducteur de mesure 6 et le signal d'excitation E reste toujours égale à 90°.

Dans ces conditions, lorsque la cavité 1 est soumise à la rotation 2, les forces de Coriolis qui s'exercent sur les particules excitées ont pour conséquence l'apparition d'un mode de résonance azimutal dont la ligne d'extrema de pression est perpendiculaire à celle du mode azimutal d'excitation, c'est-à-dire dirigée selon l'axe Oz. L'amplitude des variations de pressions de ce mode de résonance induit par les forces de Coriolis est proportionnelle à la vitesse de la rotation 2.

Le signal M en sortie de l'amplificateur différentiel 23 est représentatif des variations de pression du mode induit par les forces de Coriolis, puisque ces variations sont en opposition de phase sur les deux transducteurs de mesure 4 et 5, alors que le signal résiduel dû au mode d'excitation, en principe identique pour les transducteurs de mesure 4 et 5, n'apparaît pas dans le signal M.

Le signal M, à la même fréquence que le signal E, subit une détection synchrone dans le circuit 24, ce qui fournit le signal V de mesure de la vitesse de la rotation 2.

Le gyromètre de l'invention, comme cela a d'ailleurs déjà été expliqué est beaucoup moins sensible aux imprécisions et variations mécaniques que les gyromètres de l'art antérieur du fait que, à cause de la symétrie de révolution autour de l'axe de rotation, la fréquence du mode de résonance induit par les forces de Coriolis est nécessairement identique à la fréquence d'excitation. Il en résulte que le niveau des signaux parasites captés par les transducteurs de mesure est très faible.

De plus, le coefficient de qualité d'une cavité en forme d'ellipsoïde de révolution est plus élevé que celui d'une cavité parallélépipédique de volume égal. Ceci contribue à une amélioration de la sensibilité.

Du fait que la dimension axiale H de la cavité est inférieure au diamètre D de sa plus grande section transversale, les modes de résonance susceptibles d'apparaître dans le plan xOz ont des fréquences nettement supérieures à la fréquence de résonance du mode azimutal dans le plan yOz, ce qui contribue, là encore, à réduire le niveau des signaux parasites susceptibles d'être captés par les transducteurs de mesure 4 et 5.

Ainsi, avec une cavité elliptique remplie d'air dont le grand axe est 5 cm, le petit axe 3 cm et la fréquence de résonance 4000 Hz, on obtient un coefficient de qualité de 250, et un seuil de sensibilité correspondant à une vitesse de rotation de 10° par heure.

Ce résultat est à rapprocher de celui obtenu avec une cavité cylindrique pour laquelle la fréquence de résonance est accessible par la formule :

$$f = \frac{c_o}{2\pi} \frac{\lambda_i}{R}$$

formule dans laquelle :

$C_o$ = célérité des ondes acoustiques
$R$ = rayon du cylindre
$\lambda_i$ = 1,84948 (première racine de la fonction de Bessel de première espèce $J'_1$).

Dans le cas d'une cavité de rayon $R$ = 3 cm et de hauteur $H$ = 4 cm, la fréquence de résonance est voisine de 4000 Hz comme pour la cavité elliptique ci-dessus, mais le coefficient est de 150. Ceci montre donc que la cavité elliptique conduit à un encombrement plus faible et à une meilleure sensibilité que la cavité cylindrique.

Naturellement, la portée de la présente demande n'est pas limitée au gyromètre qui vient d'être décrit.

En particulier, la forme de la cavité 1 peut être changée. C'est ainsi que, pour bénéficier de l'avantage principal procuré par l'invention, à savoir l'égalité de la fréquence du mode induit par les forces de Coriolis et de la fréquence du mode d'excitation, il suffit que la cavité 1 soit un corps de révolution d'axe Ox. La symétrie de ce corps par rapport au plan yOz, si elle facilite en général la réalisation mécanique, n'est pas obligatoire.

Parmi l'ensemble des formes possibles, une mention particulière doit être faite pour la sphère, qui est un corps de révolution à la fois autour de l'axe Ox, de l'axe Oy et de l'axe Oz. Dans ce cas, avec un unique mode d'excitation azimutal ayant sa ligne d'extrema de pression le long de l'axe Oy, produit par un transducteur d'excitation comme le transducteur 3 précédent, il est évident qu'il sera possible de mesurer simultanément la vitesse de rotation autour de l'axe Ox, et la vitesse de rotation autour de l'axe Oz, en disposant par exemple une paire de transducteurs de mesure sur l'axe Oz et une paire de transducteurs de mesure sur l'axe Ox, respectivement. Le gyromètre ainsi réalisé est alors un gyromètre biaxial, puisqu'il peut mesurer deux vitesses de rotation d'axes orthogonaux. Il serait également possible de réaliser un gyromètre triaxial, en ajoutant alors au moins un transducteur d'excitation pour produire un mode azimutal ayant sa ligne d'extrema de pression le long de l'axe Ox par exemple et en effectuant alors un multiplexage temporel des excitations et des mesures.

Il sera noté toutefois que dans le cas d'une cavité en forme de sphère, ou d'une manière générale d'une cavité en forme de corps de révolution dont la dimensions axiale est sensiblement égale, voire supérieure, au diamètre de la plus grande section transversale, les fréquences propres des modes dans le plan xOz sont sensiblement égales, voire inférieures, à la fréquence propre des modes azimutaux d'excitation et induits, c'est-à-dire la fréquence d'excitation du signal E. Comme ces modes ont tendance à apparaître, en tant que sources de signaux parasites, avec une intensité d'autant plus élevée que leur fréquence propre est voisine de la fréquence d'excitation, le niveau des parasites peut être alors relativement élevé.

Aussi, lorsque l'on cherche à obtenir de bonnes performances, il est avantageux de choisir une forme "aplatie", c'est-à-dire dont la dimension axiale est inférieure au diamètre de la plus grande section transversale, car alors les modes parasites dans le plan xOz ont des fréquences propres supérieures à la fréquence d'excitation. Ils sont donc évanescents à cette fréquence et leur contribution au niveau des signaux parasites captés par les transducteurs de mesure est réduite.

Parmi les formes de révolution aplaties, l'ellipsoïde de révolution de type aplati, qui a été décrit, procure encore un avantage, puisque le facteur de qualité de la cavité ainsi réalisée est alors maximal.

Naturellement, on ne sort pas du cadre de l'invention en changeant l'agencement des transducteurs 3, 4, 5 et 6. En particulier, il n'est pas obligatoire d'utiliser une paire de transducteurs de mesure appariés comme les transducteurs 4 et 5, un seul transducteur étant en principe suffisant, tout au moins lorsque les performances recherchées ne sont pas particulièrement élevées et lorsque le niveau résiduel reste faible par rapport au signal à mesurer. De même, le transducteur de mesure 6 et le circuit 21 d'asservissement de phase ne sont pas absolument nécessaires, et on peut utiliser d'autres méthodes d'asservissement et, plus généralement, d'excitation de la cavité sur son mode résonant.

Dans la description qui précède, on a considéré que le fluide de remplissage était de l'air. Ceci n'est évidemment pas obligatoire, et la cavité peut être remplie par un autre type de fluide, et en particulier un gaz à masse molaire élevée, comme le xénon, ou un hydrocarbure lourd, de façon à réduire les dimensions de la cavité, en vue d'une miniaturisation du dispositif.

## Revendications

1. Gyromètre acoustique comprenant une cavité (1) remplie d'un fluide, des moyens d'excitation (3, 6, 21, 22) agencés pour exciter un premier mode de résonance acoustique de la cavité, et des moyens de mesure (4, 5, 23, 24) d'au moins un deuxième mode de résonance acoustique de la cavité, induit par les forces de Coriolis lorsque la cavité est soumise à au moins une rotation (2) à mesurer, gyromètre caractérisé par le fait que la cavité (1) est en forme de corps de révolution d'axe confondu avec l'axe (Ox) de la rotation (2) à mesurer, et les moyens d'excitation comprennent au moins un transducteur d'excitation (3) disposé sur la paroi de la cavité (1), dans un plan de section droite.

2. Gyromètre selon la revendication 1, dans lequel ladite cavité (1) a une dimension axiale (H) au plus égale au diamètre (D) de sa plus grande section transversale.

3. Gyromètre selon l'une des revendications 1 et 2, dans lequel ladite cavité (1) est un ellipsoïde de révolution.

4. Gyromètre selon l'une des revendications 1 à 3, dans lequel les moyens de mesure comprennent au moins un transducteur de mesure (4, 5) disposés sur la paroi de la cavité (1) dans le plan de section droite du transducteur d'excitation (3), et décalé d'un angle de 90° par rapport à celui-ci.

## Claims

1. Acoustic gyrometer comprising a cavity (1) filled with a fluid, exciting means (3, 6, 21, 22) arranged for exciting a first acoustic resonance mode within the cavity, and means (4, 5, 23, 24) for measuring at least a second acoustic resonance mode within the cavity, induced by Coriolis force, when the cavity is under the action of at least one rotation (2) to measure, gyrometer characterized in that the cavity has a shape of a body of revolution with an axis extending along the axis (Ox) of rotation 2 to measure and the exciting means comprises at least an excitation transducer (3) mounted on the wall of the cavity (1), within a perpendicular cross-sectional plane.

2. Gyrometer according to claim 1, wherein said cavity (1) has an axial dimension (H) at most equal to the diameter (D) of its greatest transverse dimension.

3. Gyrometer according to one of claims 1 and 2, wherein said cavity (1) is an ellipsoid of revolution.

4. Gyrometer according to one of claims 1 to 3, wherein the measuring means includes at least a measurement transducer (4, 5) mounted on the wall of the cavity (1) within the perpendicular cross-sectional plane of the excitation transducer (3) and offset by an angle of 90° with respect thereto.

**Patentansprüche**

1. Akustisches Gyrometer umfassend einen mit einem Fluid gefüllten Hohlraum (1), Erregungsmittel (3, 6, 21, 22) zum Erregen eines ersten akustischen Resonanzmodus des Hohlraums und Vorrichtungen (4, 5, 23, 24) zum Messen von mindestens einem zweiten akustischen Resonanzmodus des Hohlraums, welcher durch die Corioliskräfte induziert wird, wenn der Hohlraum unter in mindestens einer zu messender Umdrehung (2) steht, Gyrometer dadurch gekennzeichnet, daß der Hohlraum (1) die Form eines Rotationskörpers hat, dessen Achse zugleich die Achse (Ox) der zu messenden Umdrehung (2) ist und die Erregungsmittel mindestens einen Erregungswandler (3) umfassen, der auf der Wand des Hohlraums (1) in einer Querschnittsebene angeordnet ist.

2. Gyrometer gemäß Anspruch 1, bei welchem der genannte Hohlraum (1) ein Axialmaß (H) aufweist, das höchstens dem Durchmesser (D) seines größten Querschnittes entspricht.

3. Gyrometer gemäß einem der Ansprüche 1 und 2, bei welchem der genannte Hohlraum (1) ein Rotationsellipsoid ist.

4. Gyrometer gemäß einem der Ansprüche 1 bis 3, bei welchem die Meßvorrichtungen mindestens einen Meßwandler (4, 5) umfassen, welcher an der Wand des Hohlraumes (1) in der Querschnittsebene des Erregungswandlers (3) angeordnet und zu diesem in einem Winkel von 90° versetzt ist.

FIG.1

FIG.2

FIG.3

FIG.5

FIG.4